# EUROPÄISCHE PATENTSCHRIFT

(11) **EP 3 464 040 B1**
(45) Veröffentlichungstag und Bekanntmachung des Hinweises auf die Patenterteilung: **02.12.2020**
(21) Anmeldenummer: 17729083.0
(22) Anmeldetag: 06.06.2017
(51) Int. Cl.: B62K 15/00, B62H 1/04, B62H 1/02, B62K 21/16, B62J 50/22, B62K 21/02, B62K 25/00

(54) **ZUSAMMENKLAPPBARER MOTORROLLER**
FOLDABLE MOTOR SCOOTER
SCOOTER MOTORISÉ PLIABLE

(30) Priorität: 06.06.2016 DE 102016110447
(43) Veröffentlichungstag der Anmeldung: 10.04.2019
(73) Patentinhaber: UJET S.A., 3364 Leudelange (LU)
(72) Erfinder: DAVID, Patrick, 89134 Blaustein (DE); GREHL, Mariana, 89195 Staig (DE); SPEIDEL, Timo, 89081 Ulm-Jungingen (DE)
(74) Vertreter: Würmser, Julian
(86) Internationale Anmeldenummer: PCT/EP2017/063666
(87) Internationale Veröffentlichungsnummer: WO 2017/211792

(56) Entgegenhaltungen:
- CN-U- 203 819 440
- US-A1- 2011 024 217
- US-A1- 2016 137 254
- US-B1- 6 739 421

## Beschreibung

Die Erfindung betrifft einen zusammenklappbaren Motorroller, mit einem eine Sitz-Einheit und ein Hinterrad tragenden hinteren Rahmenteil und einem eine Lenkeinheit und ein Vorderrad tragenden vorderen Rahmenteil, gemäß Patentanspruch 1.

Aus dem Stand der Technik sind zusammenklappbare elektrische Motorräder bekannt. Rein exemplarisch wird auf die DE 10 2006 002 912 B4 verwiesen. Entsprechende elektrische Motorroller oder motorisierte Zweiräder haben üblicherweise eine Karosserie und zwei Räder, wobei eines der Räder über einen elektrischen Antrieb angetrieben wird.

Bislang erweisen sich zusammenklappbare elektrische Motorräder während des Fahrens als unkomfortabel. Dies ist z.B. auf die relativ klein dimensionierten Räder sowie die ebenfalls klein dimensionierten Sitzflächen und Lenkeinheitsaufbauten zurückzuführen.

Die Druckschrift US 2011/0024217 A1 beschreibt die Merkmale des Oberbegriffs des Anspruchs 1. Weitere Motorroller sind aus der US 2016/0137254 A1 und der US 6,739,421 B1 bekannt

Ausgehend von diesem Stand der Technik ist es Aufgabe der vorliegenden Erfindung, einen zusammenklappbaren Motorroller bereitzustellen, der zum einen einfach zusammenzuklappen ist und zum anderen die gewohnte Komfortabilität von standardmäßigen Motorrädern, insbesondere Zweirädern, aufweist.

Erfindungsgemäß wird diese Aufgabe im Hinblick auf den zusammenklappbaren Motorroller durch den Gegenstand des Patentanspruchs 1 gelöst.

Vorteilhafte und zweckmäßige Ausgestaltungen des erfindungsgemäßen zusammenklappbaren Motorrollers sind in den Unteransprüchen angegeben.

Erfindungsgemäß wird die Aufgabe durch einen zusammenklappbaren Motorroller, mit einem eine Sitz-Einheit und ein Hinterrad tragenden hinteren Rahmenteil und einem eine Lenkeinheit und ein Vorderrad tragenden vorderen Rahmenteil gelöst, wobei das vordere Rahmenteil und das hintere Rahmenteil über ein azentrisches Drehgelenk miteinander verbunden sind derart, dass beim Zusammenklappen des Motorrollers mindestens eines des vorderen und des hinteren Rahmenteils derart verschwenkbar ist, dass das Vorderrad und das Hinterrad nebeneinander, insbesondere deckungsgleich nebeneinander, angeordnet sind.

Demnach umfasst der Motorroller mindestens zwei Rahmenteile, die gelenkig miteinander verbunden sind, wobei ein Zusammenklappen der beiden Rahmenteile derart möglich ist, dass das Vorderrad und das Hinterrad im zusammengeklappten Zustand in eine derartige Lage gebracht werden können, dass diese beiden Räder nebeneinander stehend angeordnet sind. Nebeneinander stehend bezeichnet in diesem Zusammenhang die relative Position zueinander. Es ist durchaus möglich, dass sich die beiden Räder im zusammengeklappten Zustand nicht berühren. Als deckungsgleich nebeneinander angeordnet ist eine derartige Position der Räder zu verstehen, in welcher die kreisrunden Querschnittsflächen der Räder nebeneinander angeordnet sind, wobei die Querschnittsflächen vorzugsweise nicht zueinander verkippt sind. Vorzugsweise ist das Hinterrad parallel und deckungsgleich zum Vorderrad im zusammengeklappten Zustand des Motorrollers angeordnet.

Ein wesentlicher Vorteil eines derartig zusammengeklappten Motorrollers besteht darin, dass der zusammenklappbare Motorroller mit geringem Kraftaufwand zusammenklappbar ist, wobei nicht auf standardmäßige große Motorrollerräder verzichtet werden muss.

Vorzugsweise weist der zusammenklappbare Motorroller eine Ständervorrichtung auf, die mindestens zwei Seitenständer umfasst. Als zwei Seitenständer sind zwei Beine zu verstehen, die seitlich aus dem zusammenklappbaren Motorroller ausklappbar sind. Vorzugsweise umfasst die Ständervorrichtung mindestens einen linken und mindestens einen rechten Seitenständer. Als links und rechts sind die Richtungsangaben ausgehend von der Längsachse des Motorrollers, insbesondere ausgehend von einer Mittelstrebe des Rahmens des Motorrollers, zu verstehen.

Vorzugsweise sind die mindestens zwei Seitenständer zueinander asymmetrisch angeordnet und weisen unterschiedliche Längen auf. Als asymmetrische Anordnung ist eine derartige Anordnung von mindestens zwei Seitenständern zu verstehen, die darauf abzielt, dass die Ausklappwinkel der Seitenständer unterschiedlich ausgebildet sind. Die Seitenständer können auch hinsichtlich ihrer relativen Position zur Längsachse unterschiedlich ausgebildet sein.

Besonders bevorzugt weisen die Seitenständer unterschiedliche Längen auf. Vorzugsweise ist der linke Seitenständer, wobei links als in Fahrtrichtung links zu verstehen ist, kürzer als der rechte Seitenständer.

Des Weiteren kann die Ständervorrichtung, insbesondere der kürzere Seitenständer der mindestens zwei Seitenständer, mit einer Feder verbunden sein, die beim Ausklappen der Ständervorrichtung, insbesondere beim Ausklappen eines/des kürzeren Seitenständers, spannbar ist. Eine derartige Feder bewirkt, dass ein ausgeklappter Seitenständer beim Anheben des zusammenklappbaren Motorrollers selbsttätig einklappt bzw. eingeschwenkt wird.

Vorzugsweise sind die mindestens zwei Seitenständer mechanisch miteinander gekoppelt. Durch Betätigung eines Seitenständers kann somit auch der mindestens eine weitere Seitenständer betätigt werden. Die mechanische Kopplung wird beispielsweise über ein Gestänge realisiert. Vorzugsweise ist der kürzere Seitenständer als zu betätigender Seitenständer ausgebildet. Durch Betätigen des kürzeren Seitenständers kann somit ohne zusätzlichen Mehraufwand im gleichen Schritt der längere Seitenständer ausgeklappt werden.

Bei einer Kopplung der Ständervorrichtung, insbesondere des kürzeren Seitenständers, mit einer Feder, und gleichzeitig mechanischer Kopplung des kürzeren Seitenständers mit dem längeren Seitenständer, kann durch ein selbstständiges Einklappen des kurzen Ständers auch der längere Seitenständer eingeklappt werden.

Die beiden Rahmenteile, also das vordere Rahmenteil und das hintere Rahmenteil, sind zumindest im ausgeklappten Zustand durch einen lösbaren Mechanismus, insbesondere einen lösbaren Rastmechanismus, miteinander verriegelt bzw. verrastet. Durch Entriegeln bzw. Entrasten des Mechanismus, insbesondere des Rastmechanismus, können die beiden Rahmenteile aufgrund des azentrischen Drehgelenks zusammengeklappt werden. Insbesondere wird das vordere Rahmenteil in Richtung des hinteren Rahmenteils um das azentrisch ausgebildete Drehgelenk geschwenkt bzw. verschwenkt. Durch Entriegeln bzw. Entrasten des (Rast)mechanismus können die beiden Rahmenteile um die Drehachse des azentrisch ausgebildeten Drehgelenks verschwenkt werden. Die Achse des Drehgelenks läuft im Wesentlichen senkrecht zur Auflagefläche, auf der der Motorroller steht.

Als azentrisches Drehgelenk ist insbesondere ein derartiges Drehgelenk zu verstehen, das nicht auf der Längsachse des Motorrollers ausgebildet ist. Vorzugsweise ist die Längsachse als Teil einer Schnittebene ausgebildet, die in Längsrichtung des Motorrollers verläuft und den Motorroller bei einer Draufsicht in etwa halbiert. Das Drehgelenk ist von der Längsachse des Motorrollers beabstandet ausgebildet. Die Drehachse des Drehgelenks verläuft im Wesentlichen senkrecht zur Auflagefläche, auf der der Motorroller, insbesondere mit eingeklappter Ständervorrichtung, senkrecht steht bzw. gehalten wird. Vorzugsweise ist das Drehgelenk im Bereich der Fußablage(fläche) des Motorrollers ausgebildet.

Das Drehgelenk ist vorzugsweise im Sinne eines Scharniergelenks, insbesondere als Schaniergelenk, ausgebildet. Insbesondere ist ein Gelenkstift ausgebildet, der mindestens einen Plattenabschnitt des vorderen Rahmenteils und mindestens einen Plattenabschnitt des hinteren Rahmenteils miteinander drehbar verbindet. Der Gelenkstift bestimmt die Drehachse des Drehgelenks.

Erfindungsgemäß umfasst der Motorroller ein das vordere Rahmenteil und das hintere Rahmenteil im auseinandergeklappten Zustand verriegelnder Mechanismus, der einen Verriegelungshaken umfasst, der durch ein Pedal betätigtbar ist, wobei das Pedal als Teilabschnitt einer Fußablage des Motorrollers ausgebildet ist. Als Fußablage des Motorrollers ist insbesondere eine Trittablage zu verstehen. Die Fußablage eines Motorrollers betrifft beispielsweise die Fußablagefläche eines Motorrollers.

Das genannte Pedal ist somit vorzugsweise als Fußpedal ausgebildet. Durch Betätigen des Pedals kann der verriegelnde Mechanismus betätigt, insbesondere entriegelt, werden. Vorzugsweise ist der verriegelnde Mechanismus als Teil des Pedals ausgebildet. Insbesondere ein Verriegelungshaken bzw. eine Verriegelungskontur kann am Pedal ausgebildet sein. Dies hat den Vorteil, dass der verriegelnde Mechanismus aus relativ wenigen Bauteilen besteht und zudem einfach zu betätigen ist. Es müssen keine großen Kräfte zur Betätigung des Mechanismus aufgewandt werden.

In einer weiteren Ausführungsform der Erfindung ist es möglich, dass das Pedal mittels eines Seitenständers entriegelbar ist. Vorzugsweise ist das Pedal, insbesondere in dem Fall, in dem das Pedal als Teilabschnitt einer Fußablage des Motorrollers ausgebildet ist, nicht in jedem Zustand betätigbar. Sofern sich der Motorroller in einem Fahrzustand befindet, ist es gefährlich, das Pedal zu betätigen. Es könnte ein unbeabsichtigtes Zusammenklappen des Motorrollers während der Fahrt erfolgen. Insbesondere bei einem fahrenden Motorroller ist es nachteilig, wenn das Pedal, das insbesondere als Fußpedal ausgebildet ist, jederzeit betätigbar wäre.

Vorzugsweise ist das Pedal nur in einem abgestellten Zustand des Motorrollers betätigbar. Als abgestellter Zustand eines Motorrollers ist der Zustand des Motorrollers durch Ausklappen mindestens eines Ständers gegeben. Demnach ist es vorteilhaft, wenn das Pedal mittels eines Seitenständers entriegelbar ist. Hierzu weist der Seitenständer einen Anschlag auf, der im eingeklappten Zustand des Seitenständers auf das Pedal drückt, so dass das Pedal selbst nicht gedrückt bzw. betätigt werden kann. Sofern der Seitenständer ausgeklappt ist, wird vorzugsweise auch der Anschlag bewegt. Insbesondere wird der Anschlag beim Ausklappen des Seitenständers vom Pedal wegbewegt, so dass das Pedal selbst bewegbar bzw. betätigbar ist.

In einer alternativen Ausführungsform der Erfindung ist es möglich, dass das Pedal mittels eines Seitenständers verriegelt ist, wobei der Seitenständer ein hakenartiges Element aufweist. Das hakenartige Element kann in ein bolzenartiges Element des Pedals und/oder des Fahrzeugrahmens eingreifen. Der Haken ist vorzugsweise im eingeklappten bzw. hochgeklappten Zustand des Seitenständers in den Bolzen eingehakt. Sofern der Seitenständer ausgeklappt bzw. seitlich weggeklappt wird, kann der Haken aus dem verrasteten Zustand gelöst werden. Der Bolzen (des Pedals) ist im ausgeklappten Zustand des Seitenständers freigegeben, so dass das Pedal erst im abgestellten Zustand des zusammenklappbaren Motorrollers betätigbar ist.

In einer besonders bevorzugten Ausführungsform der Erfindung ist am Pedal ein/der Verriegelungshaken ausgebildet, wobei am vorderen Rahmenteil vorzugsweise ein Verriegelungsbolzen bzw. ein derartiges Verriegelungselement ausgebildet ist, in das der Verriegelungshaken oder eine Verriegelungskontur eingreifen kann.

Nach dem vollständigen Entriegeln des Mechanismus kann anschließend das vordere Rahmenteil in Richtung des hinteren Rahmenteils geschwenkt werden. Das Schwenken erfolgt um die Drehachse des Drehgelenks.

Besonders bevorzugt bestimmt ein/der längere(r) Seitenständer der Ständervorrichtung die Schwenkrichtung des vorderen Rahmenteils in Richtung des hinteren Rahmenteils.

Zusätzlich ist es möglich, dass die Ständervorrichtung, insbesondere einer der Seitenständer, besonders bevorzugt der längere Seitenständer, eine Störkontur aufweist, so dass das Vorderrad entlang der Störkontur in Richtung des Hinterrads geschwenkt werden kann. Die Störkontur bewirkt des Weiteren, dass das Vorderrad nicht mit anderen Teilen des zusammenklappbaren Motorrollers während des Zusammenklappvorgangs verhaken kann.

In einer Ausführungsform können das Vorderrad und das azentrische Drehgelenk derart zueinander angeordnet sein, sodass das Vorderrad entlang einer Kreisbahn um das azentrische Drehgelenk herum verschwenkbar ist. Dadurch, dass das Vorderrad einer Kreisbahn folgt, kann der Fahrer auf einfache Art und Weise den Motorroller zusammenklappen oder aufklappen.

In einer Ausführungsform können das Hinterrad, die Ständervorrichtung und zumindest ein Teilabschnitt einer/der Fußablage, insbesondere ein/das Pedal, derart angeordnet und dazu ausgebildet sein, zumindest abschnittsweise während eines Zusammenklappens des Motorrollers, insbesondere während einer ersten Drehphase, insbesondere die einzigen, Auflagepunkte des Motorrollers bilden. Zum sicheren Halten eines Motorrollers sind grundsätzlich zumindest drei Auflagepunkte notwendig. Diese können während einer ersten Drehphase durch das Vorderrad, das Hinterrad und die Ständervorrichtung gebildet werden.

In einer zweiten Drehphase, die insbesondere auf die erste Drehphase folgt, können das Hinterrad, die Ständervorrichtung und zumindest ein Teilabschnitt einer/der Fußablage, insbesondere ein/das Pedal, derart angeordnet und dazu ausgebildet sein, insbesondere beim Zusammenklappen, insbesondere die einzigen, Auflagepunkte des Motorrollers zu bilden.

Die Auflagepunkte des Motorrollers können also während des Zusammenklappens bzw. des Aufklappens wechseln. Wenn, wie während der zweiten Drehphase, das Vorderrad keinen Auflagepunkt bildet, kann es frei verschwenkt werden, sodass es mit dem Hinterrad parallel gestellt werden kann, z.B. um das Vorderrad mit dem Hinterrad zu verriegeln.

In einer Ausführungsform kann die Ständervorrichtung mit dem vorderen Rahmenteil, insbesondere über ein Ständergelenk, verbunden sein. Wenn die Ständervorrichtung am vorderen Rahmenteil befestigt ist, dann kann die Fußablage, die am hinteren Rahmenteil angeordnet sein kann, als Auflagepunkt agieren.

Vorzugsweise ist das azentrische Drehgelenk auf der Seite des Motorrollers, insbesondere auf der Seite der Fußablage des Motorroller, ausgebildet, die zu dem längeren Seitenständer weist. Vorzugsweise sind sowohl das azentrisch ausgebildete Drehgelenk als auch der längere Seitenständer auf einer gleichen Seite, d.h. links oder rechts der Längsachse des Motorrollers ausgebildet.

Im zusammengeklappten Zustand des Motorrollers ist die Achse des Vorderrads mit der Achse des Hinterrads mittels einer Radverriegelung verbunden oder verbindbar. Im zusammengeklappten Zustand des Motorrollers sind die zwei Räder nebeneinander angeordnet, so dass beide Räder gleichmäßig abrollen und ein Verschieben des zusammenklappbaren Motorrollers auch im zusammengeklappten Zustand des Motorrollers möglich ist. Hierzu ist es von Vorteil, die Achse des Vorderrads mit der Achse des Hinterrads zu verbinden.

Die Radverriegelung kann bajonettverschlussartig ausgebildet sein, wobei an einem der beiden Räder, insbesondere an dem Hinterrad, ein Radverriegelungs-Bolzen und an dem verbleibenden Rad, insbesondere an dem Vorderrad, eine Bolzen-Aufnahme ausgebildet ist. Die Radverriegelung ist demnach vorzugsweise als Bajonettverschluss ausgebildet. Der Radverriegelungs-Bolzen ist vorzugsweise zylindrisch ausgebildet. Es ist möglich, dass der Radverriegelungs-Bolzen einen Doppelzylinder aufweist, wobei im innenliegenden Zylinder eine Verriegelungskontur ausgebildet ist.

Die Bolzen-Aufnahme ist beispielsweise trichterartig ausgebildet. Die Bolzen-Aufnahme kann eine Findungskontur aufweisen. Hierzu ist ein abgerundeter Trichter ausgebildet, so dass der Radverriegelungs-Bolzen in dem Trichter gleitet bzw. der Radverriegelungs-Bolzen entlang der Findungskontur zum Zentrum der Bolzen-Aufnahme gelangt. Im Zentrum der Bolzen-Aufnahme kann mindestens ein Verriegelungs-Stift ausgebildet sein.

Es ist möglich, dass die Bolzen-Aufnahme und/oder Teile der Radverriegelung, insbesondere die Findungskontur, mit einem besonders gleitfähig ausgebildeten Material beschichtet ist/sind. Die Findungskontur kann mit einem Kunststoff beschichtet sein. Des Weiteren ist es möglich, dass die Findungskontur, insbesondere die trichterförmig ausgebildete Findungskontur aus Kunststoff besteht. Beispielsweise ist es möglich, dass in diesem Zusammenhang hochmolekular thermoplastischer Kunststoff, insbesondere Polyoximethylen (POM), verwendet wird. Die Bolzen-Aufnahme kann im Zentrum einen Verriegelungs-Stift aufweisen, der mit der Verriegelungskontur des Radverriegelungs-Bolzens zusammenwirkt. Der Radverriegelungs-Bolzen kann hingegen einen Verriegelungsschlüssel aufweisen. Dieser Verriegelungsschlüssel dient dazu, den Radverriegelungs-Bolzen bzw. Teile des Radverriegelungs-Bolzens zu drehen. Die Drehung kann bewirken, dass die Radverriegelungs-Kontur derart in Relation zu einem Verriegelungs-Stift der Bolzen-Aufnahme gedreht wird, so dass ein Lösen der bajonettverschlussartigen Radverriegelung möglich ist.

Die Findungskontur der Bolzen-Aufnahme ist vorzugsweise derart ausgebildet, dass das Vorderrad in Richtung des Hinterrades geschwenkt werden kann. Bei einer in etwa parallelen Stellung der beiden Räder zueinander wird der Radverriegelungs-Bolzen in die Findungskontur der Bolzen-Aufnahme eingeführt. Aufgrund der Findungskontur können die Räder in einem vorgegebenen Verlauf zueinander ausgerichtet werden.

In einer weiteren Ausführungsform der Erfindung ist es möglich, dass die Radverriegelung einen Entfederungsmechanismus, insbesondere einen Entfederungshebel, umfasst, der im zusammengeklappten Zustand des Motorrollers eine Entfederung mindestens eines Rades, insbesondere des Hinterrads, bewirkt.

Der Entfederungshebel kann als einfacher Druckhebel bzw. Drucktaster ausgebildet sein. Bei Aufbringen eines entsprechenden Druckes auf den Entfederungshebel kann eine Entfederung mindestens eines Rades, insbesondere des Hinterrades, bewirkt werden. Hierzu weist der Gegenpart der Radverriegelung, d.h. der andere Teil der Radverriegelung, der am weiteren Rad angeordnet ist, eine Entfederungshebel-Aufnahme auf. Bei einem Einrasten des Entfederungshebels in die Entfederungshebel-Aufnahme kann auf den Entfederungshebel ein entsprechender Druck aufgebracht werden, so dass eine Entfederung bewirkt wird.

Vorzugsweise ist der Entferderungshebel auf der Seite der Radverriegelung ausgebildet, die den Radverriegelungs-Bolzen aufweist. Die Entfederungshebel-Aufnahme ist vorzugsweise auf der Seite bzw. dem Element der Radverriegelung ausgebildet, die auch die Bolzen-Aufnahme umfasst.

In einer weiteren Ausführungsform der Erfindung ist es möglich, dass der Entfederungsmechanismus als ein von der Radverriegelung losgelöster Mechanismus separat am zusammenklappbaren Motorroller ausgebildet ist. Das Funktionsprinzip bleibt in diesem Zusammenhang bestehen. Der Entfederungsmechanismus bewirkt eine Entfederung mindestens eines Rades. Die Entfederung eines Rades bewirkt, dass der zusammenklappbare Motorroller m zusammengeklappten Zustand einfach zu transportieren, insbesondere einfach zu ziehen, ist. Sofern nämlich das Vorderrad und das Hinterrad unterschiedlich gefedert sind, würde ein unruhiges Laufverhalten bei parallel zueinander angeordneten Vorder- und Hinterrädern auftreten.

Aufgrund des Entfederungsmechanismus wird eine deutlich erhöhte Stabilität beim Ziehen des zusammengeklappten Motorrollers bewirkt. Ansonsten würde das zusammengeklappte Motorroller wackeln bzw. sich beim Ziehen mit einer Hand aufschaukeln.

Die Radverriegelung ist vorzugsweise derart ausgebildet, dass die Achse des Radverriegelungs-Bolzens durch die Achse des Rosterelements verläuft. Auch die Achse der Bolzen-Aufnahme kann im Wesentlichen durch die Achse des entsprechenden Rades, insbesondere des Vorderrads, verlaufen. Die Radverriegelung kann durch ein an einem der Räder, insbesondere an dem Hinterrad, ausgebildeten Hebel, insbesondere einem Fußhebel, entriegelbar sein. Der Hebel, insbesondere der Fußhebel, bewirkt ein Verdrehen eines zu einem Verriegelungsschlüssel zugehörigen Verriegelungsstabes. Das Drehen des Verriegelungsstabes sowie des Verriegelungsschlüssels bewirkt beispielsweise ein Verdrehen des Radverriegelungs-Bolzens. Damit wird die Radverriegelungs-Kontur verdreht, so dass beispielsweise ein Stift der Bolzen-Aufnahme freigegeben wird/freigegeben ist und die Bolzen-Aufnahme vom Radverriegelungs-Bolzen abgezogen werden kann.

Mittels des Hebels, insbesondere des Fußhebels, kann der Radverriegelungs-Bolzen und/oder ein Verriegelungsstift und/oder eine/die Verriegelungskontur drehbar ausgebildet sein.

In einer weiteren Ausführungsform der Erfindung ist es möglich, dass eine Radverriegelung magnetrevolverartig ausgebildet ist. Hierzu sind sowohl am Vorderrad, als auch am Hinterrad, insbesondere im Bereich der Achsen der beiden Räder, Magnete angeordnet, wobei die Magnete hinsichtlich der Ausrichtung des Nordpols und des Südpols des Magnets im Wechsel angeordnet sind. Die Magnete des Radverriegelungs-Abschnitts des Vorderrads und die Magnete des Radverriegelungs-Abschnitts des Hinterrads sind vorzugsweise derart angeordnet, dass bei einer Anordnung des Vorderrads neben dem Hinterrad eine magnetische Kraft zwischen den beiden Radverriegelungs-Abschnitten wirkt und die mindestens zwei Räder aufgrund der Magnetkraft miteinander verriegelt sind.

Auch bei dieser Ausführungsform kann die Radverriegelung durch ein an einem der Räder, insbesondere an mindestens einem Hinterrad, ausgebildeten Hebel, insbesondere einem Fußhebel, entriegelbar sein. Der Hebel bewirkt vorzugsweise eine Verdrehung der Magnete eines Radverriegelungs-Abschnitts. Eine vorher wirkende magnetische Anziehungskraft wird durch Verdrehen der Magnete eines Radverriegelungs-Abschnitts aufgehoben. Die Magnete eines ersten Radverriegelungs-Abschnitts stoßen sich von den Magneten des zweiten Radverriegelungs-Abschnitts ab. Die Radverriegelung ist in diesem Zustand entriegelt.

In einer weiteren Ausführungsform der Erfindung kann eines der beiden Räder, insbesondere das Vorderrad, hinsichtlich einer 0°-Position fixiert werden. Die Fixierung kann beispielsweise durch ein Element der Lenkeinheit bewirkt werden. Insbesondere ist es möglich, dass das Abklappen eines Griffs der Lenkeinheit das Vorderrad in der 0°-Position fixiert. In einer weiteren Ausführungsform der Erfindung ist es möglich, dass die 0°-Position durch ein Abklappen einer Anzeigevorrichtung fixiert ist/wird.

Es ist möglich, dass beim Entriegeln des das vordere Rahmenteil und das hintere Rahmenteil verriegelnden Mechanismus das mindestens eine Vorderrad in einem Hub, von beispielsweise 0,5 bis 4 mm, insbesondere von 1 bis 2 mm, nach oben bewegt wird. Dieser Hub wird beispielsweise dadurch bewirkt, dass das vordere Rahmenteil und das hintere Rahmenteil durch eine Findungskontur im Bereich des Pedals und/oder im Berich einer Fußablage miteinander verbunden sind.

Im verriegelten Zustand sind das vordere Rahmenteil und das hintere Rahmenteil mechanisch gespannt verriegelt. Durch Aufheben der Verriegelung bewirkt die entfallende Spannung, dass das vordere Rahmenteil nach unten gedrückt wird. Durch Entfallen der Spannung wird das vordere Rahmenteil leicht nach oben gedrückt bzw. das Betätigen des Pedals entriegelt den zusammenklappbaren Motorroller und übt einen Hub nach oben aus.

Die Lenkeinheit umfasst vorzugsweise einen Lenker mit einer Basis, wobei der Lenker:
- zumindest einen Griffträger, der gelenkig an der Basis angeordnet ist und der von einer ersten Trägerposition in eine zweite Trägerposition verschwenkbar ist;
- eine Haltevorrichtung, die so angeordnet und/oder ausgebildet ist, dass die Haltevorrichtung gelenkig von einer ersten Halteposition in eine zweite Halteposition verschwenkbar ist, wobei die Haltevorrichtung in der ersten Halteposition den Griffträger mit der Basis verriegelt; und
- eine Sperrvorrichtung, die gelenkig an der Basis angeordnet ist und die von einer ersten Sperrposition in eine zweite Sperrposition verschwenkbar ist, wobei die Sperrvorrichtung derart angeordnet und/oder ausgebildet ist, dass die Sperrvorrichtung in der ersten Sperrposition die Haltevorrichtung blockiert,
umfasst.

Die Lenkeinheit kann aufgrund dieser Ausführungsform abklappbare Handgriffe umfassen. Mindestens ein Griffträger kann somit mindestens einen Handgriff umfassen.

Der Lenker der Lenkeinheit kann also im Rahmen eines Klappvorganges eines Motorrollers zusammengeklappt werden, was zu einem kompakten Packmaß führt. Der Lenker umfasst eine Basis, die vorzugsweise fest mit einer Lenksäule des Lenkers verbunden ist und zumindest einen Greifträger, eine Haltevorrichtung und eine Sperrvorrichtung aufweist.

Die Griffträger können in einer Ausführungsform z.B. Bremsgriffe oder einen Gashebel aufweisen. Um ein versehentliches Zusammenklappen des Lenkers zu verhindern, blockiert die Sperrvorrichtung die Haltevorrichtung, so dass der zumindest eine Griffträger nicht verschwenkt werden kann, wenn sich die einzelnen Komponenten in den entsprechenden Positionen befinden. Dabei ist es vorgesehen, dass sich während des Betriebs des Motorrollers der zumindest eine Griffträger in der ersten Trägerposition, die Haltevorrichtung in der ersten Halteposition und die Sperrvorrichtung in der ersten Sperrposition befinden. Es wird damit verhindert, dass die Griffträger während des Betriebs verschwenkt werden, da diese von der Haltevorrichtung gehalten werden, die ihrerseits durch die Sperrvorrichtung gesichert ist. Während des Fahrens ist dadurch eine erhöhte Sicherheit geboten.

Wenn sich der Motorroller jedoch nicht in Betrieb befindet und zusammengeklappt werden soll, kann durch ein Verschwenken der Sperrvorrichtung die Haltevorrichtung entriegelt werden, so dass sich die Haltevorrichtung in die zweite Halteposition verschwenken lässt. Daraufhin kann der zumindest eine Griffträger in die zweite Trägerposition verschwenkt werden. Dies ermöglicht also ein sehr einfaches Zusammenfalten bzw. Zusammenklappen des Lenkers mittels weniger Handgriffe und kann so auch von einer Person durchgeführt werden.

In einer Ausführungsform kann der zumindest eine Griffträger in der ersten Halteposition zumindest teilweise formschlüssig bzw. reibschlüssig in der Haltevorrichtung gehalten werden.

Wenn der zumindest eine Griffträger in der ersten Halteposition zumindest teilweise formschlüssig in der Haltevorrichtung gehalten wird, so ist gewährleistet, dass sich dieser auch unter Belastung nicht verformt, so dass eine hohe Stabilität gewährleistet ist.

Ferner kann in einer Ausführungsform die Haltevorrichtung über ein Haltegelenk um eine Haltevorrichtung-Drehachse drehbar an der Basis gelagert sein. Ferner kann in einer Ausführungsform die Haltevorrichtung über ein Haltegelenk um eine Haltevorrichtung-Drehachse drehbar an der Basis gelagert sein.

Wenn auch die Haltevorrichtung über ein Haltegelenk an der Basis angeordnet ist, ist das Haltegelenk ein integraler Bestandteil der Basis. Es ist also eine erhöhte Stabilität der Gesamtkonstruktion gewährleistet. Insbesondere wird die Stabilität erhöht, wenn die Haltevorrichtung den zumindest einen Griffträger verriegelt, da, wenn der Fahrer Druck auf den zumindest einen Griffträger ausübt, hohe Drehmomente am Haltegelenk wirken und entsprechende Kräfte auf die Basis übertragen werden.

In einer Ausführungsform kann die Haltevorrichtung über ein Federelement in der ersten Halteposition vorgespannt sein.

Damit der zumindest eine Griffträger nicht versehentlich gelöst werden kann, kann die Haltevorrichtung über ein Federelement in der ersten Halteposition vorgespannt sein. Dies führt zu einer erhöhten Sicherheit. Darüber hinaus ist es für den Fahrer komfortabler, die Haltevorrichtung zu bedienen, wenn diese beim Verschwenken des Griffträgers in die Waagerechte aufgrund der Feder einschnappt.

In einem vollständig zusammengeklappten Zustand des zusammenklappbaren Motorrollers sind auch die Griffträger zusammengeklappt. Vorzugsweise werden die Handgriffe nach dem Verschwenken des vorderen Rahmenteils in Richtung des hinteren Rahmenteils nach unten geklappt. Das nach unten Klappen mindestens eines Griffes, insbesondere des linken Handgriffes, kann zusätzlich eine Fixierung des Vorderrads in einer 0°-Position hervorrufen.

In wiederrum einer weiteren Ausführungsform der Erfindung ist es möglich, dass das vordere Rahmenteil und das hintere Rahmenteil im Bereich der Verbindungszone korrespondieren zueinander ausgebildete Stabilisierungselemente aufweist. Mit anderen Worten ist es möglich, dass im Trennbereich des Rahmens mindestens eine Zapfenverbindung ausgebildet ist.

Beispielsweise kann an einem der Rahmenteile, insbesondere am hinteren Rahmenteil, mindestens ein Zapfen ausgebildet sein. Am anderen Rahmenteil, insbesondere am vorderen Rahmenteil, kann mindestens ein Zapfenloch ausgebildet sein. Im auseinandergeklappten Zustand des Motorrollers greift der mindestens eine Zapfen in das mindestens eine Zapfenloch und bewirkt eine Stabilisierung des Motorrollers im auseinandergeklappten Zustand. Vorzugsweise sind mehrere Zapfenverbindungen ausgebildet. Die Zapfenverbindungen weisen vorzugsweise unterschiedliche Geometrien und Abmaße auf.

In einer weiteren Ausführungsform der Erfindung kann dar zusammenklappbare Motorroller im Bereich der Ständervorrichtung, insbesondere an der Unterseite der Fußablage, einen Handgriff aufweisen. Dieser Handgriff kann beispielsweise im zusammenklappten Zustand des Motorrollers betätigt werden. Der Handgriff kann außerdem als Stütze verwendet werden. Die Stütze wird insbesondere im zusammengeklappten Zustand des Motorrollers notwendig, wenn die Ständervorrichtung eingeklappt ist.

Als Antrieb des zusammenklappbaren Motorrollers , insbesondere des zusammenklappbaren Motorrollers, ist ein Elektro-Antrieb möglich.

Die Stromquelle, insbesondere eine Batterie, des Elektro-Antriebs, ist vorzugsweise im hinteren Rahmenteil lösbar verankert. Die Batterie kann sich beispielsweise in einem ergonomisch ausgebildeten Batteriekasten befinden. Bei einem derartigen Elektro-Antrieb handelt es sich um einen CO₂-neutralen Antrieb. Aufgrund des lösbaren Verankerns der Batterie bzw. des Akkumulators kann ein leerer Ackumulator mit einem geladenen Akkumulator einfach ausgetauscht werden. Das Aufladen einer derartigen Stromquelle bzw. eines derartigen Akkumulators ist folglich auch innerhalb eines Hauses möglich. Es ist nicht notwendig, dass das zusammenfaltbare Zweirad an einer öffentlichen Ladestation bzw. an einer Stromtankstelle geladen wird.

Der Batteriekasten kann vorzugsweise Rollen aufweisen. In einem vom Motorroller losgelösten Zustand kann die Batterie mittels der Rollen transportiert werden. Außerdem ist es möglich, dass der Batteriekasten einen Griff, insbesondere einen teleskopierbaren bzw. ausziehbaren Griff, umfasst.

Der zusammengeklappte Motorroller kann beispielsweise mittels des Griffs des Batteriekastens gezogen und/oder geschoben werden. Außerdem kann ein Abschnitt der Lenkeinheit, insbesondere ein Abschnitt des Lenkers als Griff im zusammengeklappten Zustand des Motorrollers dienen.

Zusammenfassend handelt es sich bei dem erfindungsgemäßen zusammenklappbaren Motorroller zum einen um einen in einfacher Art und Weise zusammenklappbaren Motorroller . Das Zusammenklappen ist ohne großen Kraftaufwand durchführbar. Der Komfort des zusammenklappbaren Motorrollers, ist hinsichtlich der Dimensionierung der Räder bzw. der Lenkeinheit im Vergleich zu bekannten "nicht zusammenklappbaren" Motorrollern nicht eingeschränkt.

Nachfolgend wird die Erfindung anhand von Ausführungsbeispielen beschrieben, welche anhand von Abbildungen näher erläutert werden.

Hierbei zeigen:
- Fig. 1:: eine Seitenansicht eines auseinandergeklappten Motorrollers;
- Fig. 2:: eine perspektivische Ansicht von schräg hinten in einen abgestellten bzw. aufgeständerten Zustand des Motorrollers;
- Fig. 3:: eine Detailansicht des verrasteten Fußpedals;
- Fig. 4:: eine Unteransicht auf die Ständervorrichtung im eingeklappten Zustand;
- Fig. 5:: eine Detailansicht des verriegelten Pedals;
- Figuren 6 und 7:: Detailansichten der Radverriegelung;
- Figuren 8 und 9:: Detailansichten des Entfederungsmechanismus;
- Fig. 10:: Darstellung des Drehgelenks;
- Figuren 11 und 12:: Darstellungen des teilzusammengeklappten Zustands des Fahrzeugs;
- Figuren 13 und 14:: Darstellungen des vollständig zusammengeklappten Fahrzeugs;
- Fig. 15:: Darstellung eines fahrbereiten Fahrzeugs mit einer Anzeigeeinheit;
- Fig. 16 und 17:: Darstellung mechanischer Einzelteile des Lenkers; und
- Fig. 18: perspektivische Darstellung einer weiteren Ausführungsform des Fahrzeugs mit unterschiedlicher Ständervorrichtung.

In der nachfolgenden Beschreibung werden für gleiche und gleichwirkende Teile dieselben Bezugsziffern verwendet.

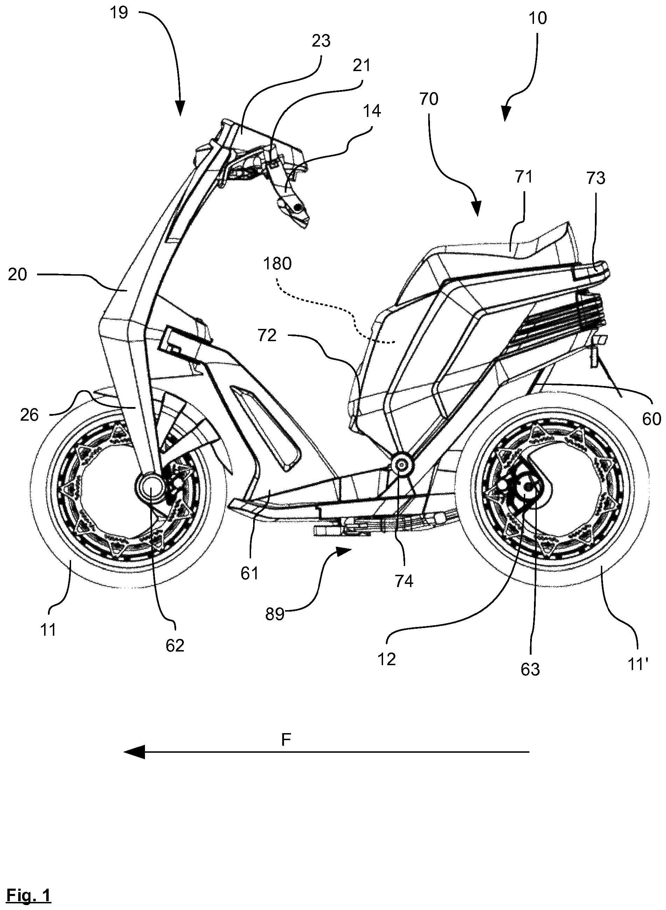

Fig. 1 zeigt ein erfindungsgemäßes Fahrzeug 10 im auseinandergeklappten Zustand. Bei dem dargestellten Fahrzeug 10 handelt es sich um ein Zweirad, insbesondere um einen Motorroller. Der Motorroller 10 weist ein hinteres Rahmenteil 60 sowie ein vorderes Rahmenteil 61 auf. Das hintere Rahmenteil 60 trägt das Hinterrad 11' sowie die Sitz-Einheit 70. Das vordere Rahmenteil 61 trägt die Lenkeinheit 19 samt dem Vorderrad 11.

Die Lenkeinheit 19 umfasst einen Lenker 21, eine Lenksäule 20 und eine an der Lenksäule 20 angeschlossene Schwinge 26. Am Lenker 21 können Bedienelemente wie z.B. eine Hupe sowie die Handgriffe 14 angeordnet sein. Des Weiteren kann der Lenker 21 eine Anzeigeeinheit 23 aufweisen, die beispielsweise die Fahrtgeschwindigkeit oder den Ladezustand einer Batterie anzeigt. Im in Fig. 1 dargestellten Beispiel ist die Anzeige 23 eingeklappt.

Die Sitz-Einheit 70 umfasst einen Sattel 71, einen Batteriekasten 72, einen verlängerbaren bzw. teleskopierbaren Griff 73 sowie Rollen 74. Die Sitz-Einheit 70 umfasst demnach innerhalb des Batteriekastens 72 eine Batterie 180, die zur elektrischen Versorgung der Antriebseinheit 12 dient. Die Sitz-Einheit 70 kann vom hinteren Rahmenteil 60 losgelöst werden, so dass die Sitz-Einheit 70, inklusive der darin befindlichen Batterie 180 separat mit Hilfe des Griffs 73 geschoben oder gezogen werden kann. Des Weiteren umfasst der zusammenklappbare Motorroller 10 eine Ständervorrichtung 89. Im dargestellten Beispiel ist die Ständervorrichtung 89 jedoch nicht betätigt.

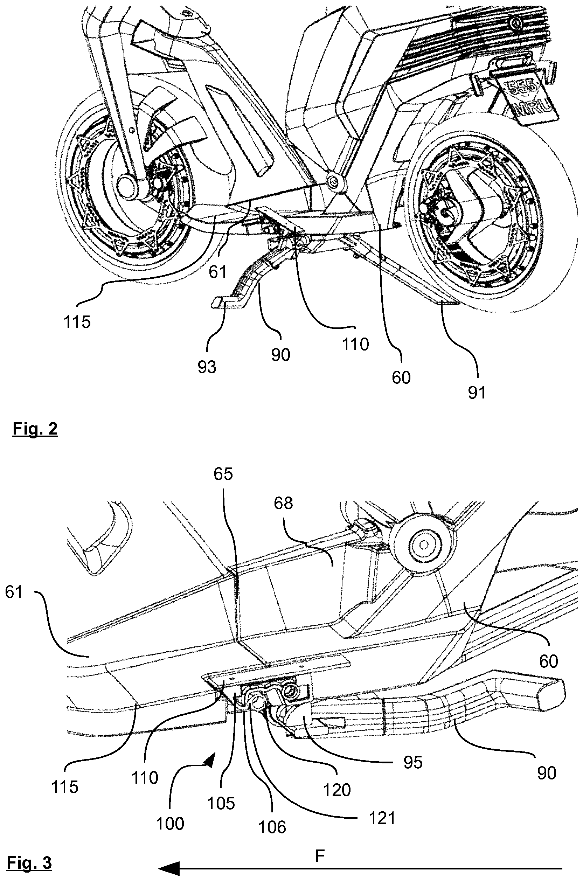

Wie in Fig. 2 zu erkennen ist, umfasst die Ständervorrichtung 89 zwei Seitenständer 90 und 91. Der linke Seitenständer 90 ist dabei kürzer als der rechte Seitenständer 91. Der linke Seitenständer 90 weist einen Hebelabschnitt 93 auf. Vorzugsweise sind die beiden Seitenständer 90 und 91 mechanisch miteinander gekoppelt, so dass eine Betätigung des linken Seitenständers 90 am Hebelabschnitt 93 zugleich eine Betätigung des rechten Seitenständers bewirkt. In Fig. 2 ist des Weiteren die Fußablage 115 zu erkennen. Die Fußablage 115 besteht ebenfalls aus einem linken und einem rechten Abschnitt, so dass beide Füße des Fahrers bequem auf dem Motorroller 10 abgestellt werden können. Ebenfalls zu erkennen ist ein Pedal 110 in einem teilweise betätigten Zustand. Das Zusammenwirken des Pedals 110 mit der Ständervorrichtung 89, insbesondere mit dem linken Seitenständer 90 ist in den Fig. 3 bis 5 näher dargestellt.

Der linke Seitenständer 90 ist in Fig. 3 nach oben geklappt bzw. nicht betätigt. Demnach ist aufgrund der mechanischen Kopplung der beiden Seitenständer 90 und 91 auch der rechte (nicht dargestellte) Seitenständer 91 nach oben geklappt. Aufgrund eines am linken Seitenständer 90 ausgebildeten Anschlagelements 95 wirkt auf das Pedal 110 eine Kraft von unten. Das Pedal 110 kann in diesem Zustand nicht betätigt werden. Das Anschlagelement 95 blockiert das Pedal 110. Das Pedal 110 ist am hinteren Rahmenteil 60 befestigt und bewirkt eine Verbindung des hinteren Rahmenteils 60 mit dem vorderen Rahmenteil 61. Zu erkennen ist ebenfalls der Trennbereich 65 zwischen dem hinteren Rahmenteil 60 und dem vorderen Rahmenteil 61. Der Trennbereich 65 ist sowohl in der Fußablage 115 als auch in der Mittelstrebe 68 ausgebildet.

Das Pedal 110 ist Teil eines Mechanismus 100, der das vordere Rahmenteil 60 und das hintere Rahmenteil 61 miteinander verriegeln kann. Der Mechanismus 100 umfasst einen Verriegelungshaken 105 sowie einen Verriegelungs-Bolzen 120. Der Verriegelungshaken 105 ist als Teil des Pedals 110 ausgebildet. Der Verriegelungshaken 105 weist eine Verriegelungskontur auf. Der Verriegelungs-Bolzen 120 ist hingegen am vorderen Rahmenteil 61 ausgebildet. Bei einem Betätigen eines entriegelten Pedals 110 kann die Nase 106 des Verriegelungshakens 105 entlang der Kontur 121 des Verriegelungs-Bolzens 120 gleiten, bis der Verriegelungshaken 105 vollständig frei ist.

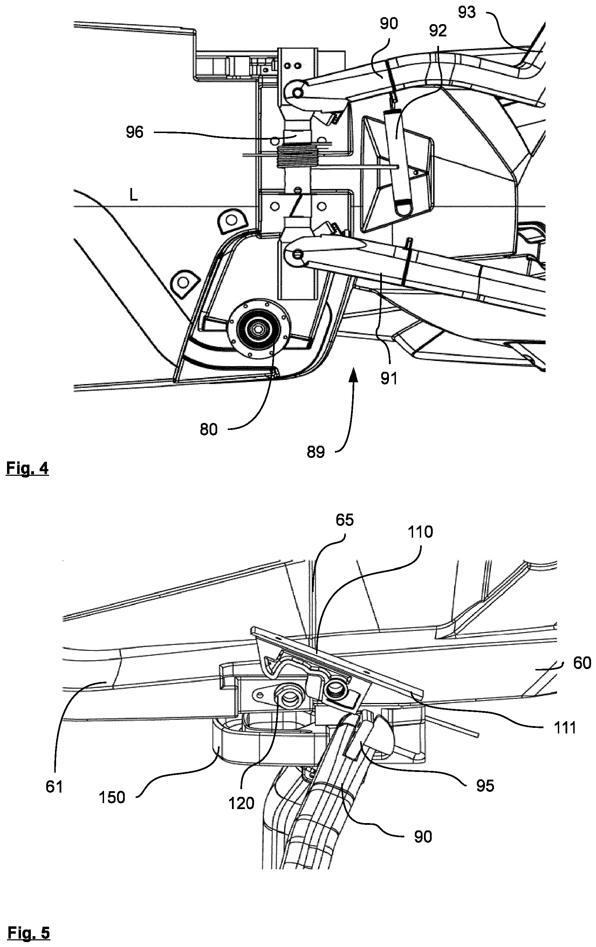

In Fig. 4 wird die Ständervorrichtung 89 in einer Unteransicht dargestellt. Zu erkennen sind der linke Seitenständer 90 sowie der rechte Seitenständer 91. Der linke Seitenständer 90 ist mit dem rechten Seitenständer 91 über ein Gestänge 96 verbunden. Zu erkennen ist außerdem eine Feder 92. Mit Hilfe dieser Feder 92 ist der Seitenständer 90, der im Vergleich zum Seitenständer 91 kürzer ist, beim Ausklappen spannbar. In Fig. 4 ist des Weiteren das Drehgelenk 80 zu erkennen. Im Zusammenhang mit der Längsachse L des Motorrollers 10 ergibt sich hinsichtlich der Seitenständer 90 und 91 der Zusammenhang, dass die beiden Seitenständer 90 und 91 asymmetrisch zueinander angeordnet sind. Der rechte Seitenständer 91 ist nicht nur länger als der linke Seitenständer 90 sondern weist auch eine andere Form und einen anderen Befestigungswinkel auf. Das Drehgelenk 80 ist in Relation zur Längsachse L des Fahrzeugs auf der rechten Seite ausgebildet. Es ergibt sich eine azentrische Anordnung des Drehgelenks 80. Das Drehgelenk 80 ist nicht auf der Längachse L ausgebildet, sondern von der Längsachse L beabstandet.

In Fig. 5 wird der ausgeklappte Seitenständer 90 dargestellt. Wie zu erkennen ist, ist das Anschlagelement 95 derart verdreht, dass das Pedal 110 bewegt werden kann. Durch Drücken des hinteren Abschnitts 111 des Pedals 110 in Richtung des Anschlagelements 95 bzw. nach unten, kann der Verriegelungshaken 105 freigegeben werden derart, dass der Verriegelungs-Bolzen 120 nicht mehr mit dem Verriegelungshaken 105 verbunden ist. Der am vorderen Rahmenteil 61 befindliche Verriegelungs-Bolzen 120 ist freigegeben, so dass das vordere Rahmenteil 61 vom hinteren Rahmenteil 60 zumindest abschnittsweise getrennt werden kann.

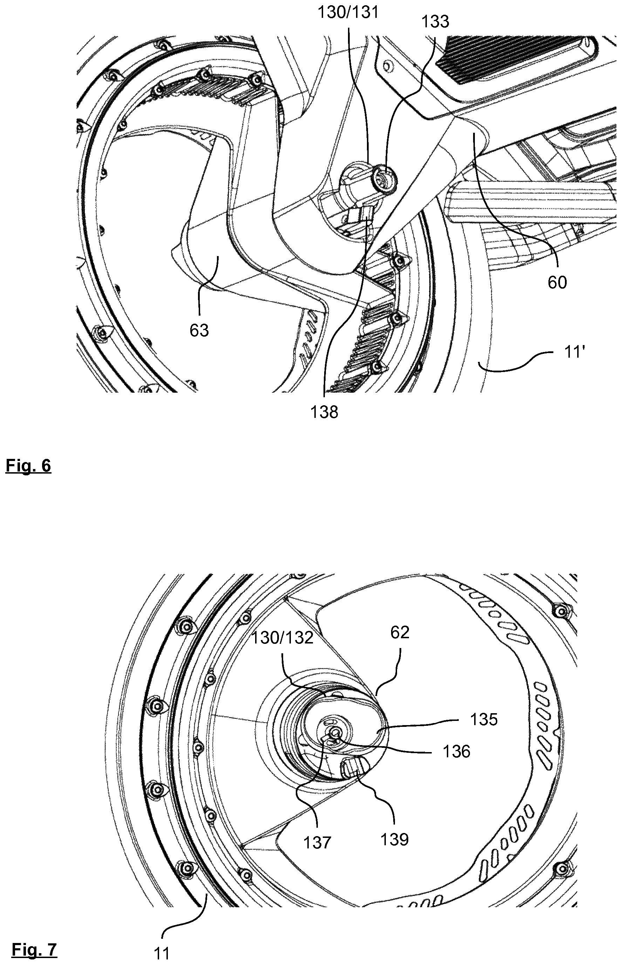

Sofern der verriegelnde Mechanismus 100 gelöst ist, kann das vordere Rahmenteil 60 in Richtung des hinteren Rahmenteils 61 geklappt werden. Um die beiden Räder, nämlich das Vorderrad 11 und das Hinterrad 11', bequem nebeneinander führen zu können, weist das Fahrzeug, insbesondere der Motorroller 10, eine Radverriegelung 130 auf. In den Fig. 6 und 7 sind die Einzelteile der Radverriegelung 130 dargestellt.

In Fig. 6 ist das Hinterrad 11' sowie das hintere Rahmenteil 60 dargestellt.

In Fig. 7 ist hingegen das Vorderrad 11 und das hierzu gehörige Element der Radverriegelung 130 dargestellt. Die Radverriegelung 130 bewirkt ein Verbinden der Achse 62 des Vorderrads 11 mit der Achse 63 des Hinterrads 11'.

Die Radverriegelung 130 ist bajonettverschlussartig ausgebildet. An dem Hinterrad 11' ist ein Radverriegelungs-Bolzen 131 und an dem Vorderrad 11 ist eine Bolzen-Aufnahme 132 ausgebildet. Der Radverriegelungs-Bolzen 131 ist doppelzylindrisch ausgebildet und weist im Inneren eine Verriegelungskontur 133 auf. Der Radverriegelungs-Bolzen 131 wird beim Zurückschwenken des Vorderrads 11 bzw. des vorderen Rahmenteils 61 in die Bolzen-Aufnahme 132 des Vorderrads 11 geführt. Hierzu weist die Bolzenaufnahme 132 eine Findungskontur 135 auf. Die Findungskontur 135 ist vorzugsweise speziell beschichtet, so dass der Radverriegelungs-Bolzen 131 entlang der Findungskontur 135 in Richtung des Zentrums 136 der Bolzen-Aufnahme 132 gleiten kann.

Die Findungskontur 135 ist trichterartig ausgebildet. Vorzugsweise ist der Trichter derart groß, dass der Radverriegelungs-Bolzen 131 bequem in Richtung des Zentrums 136 gleiten kann. Die Bolzen-Aufnahme 132 weist außerdem einen Stift 137 auf, der in die Verriegelungskontur 133 des Radverriegelungs-Bolzens 131 greifen kann. Sofern die Radverriegelung 130 vollständig verriegelt ist, können die beiden Räder 11 und 11' bequem nebeneinander zusammen geschoben bzw. zusammen gezogen werden.

Die Radverriegelung 130 umfasst des Weiteren einen Entfederungsmechanismus, insbesondere einen Entfederungshebel 138, der im zusammengeklappten Zustand des Fahrzeugs 10 eine Entfederung mindestens eines Rades, insbesondere des Hinterrades 11', bewirkt. Der Entfederungshebel 138 kann als einfacher Druckhebel ausgebildet sein. Bei Aufbringen eines entsprechenden Druckes auf den Entfederungshebel 138 wird die Entfederung des Rades 11' bewirkt. Hierzu weist der Gegenpart der Radverriegelung 130, d.h. der vordere Teil der Radverriegelung 130, eine Entfederungshebel-Aufnahme 139 auf. Bei dem Einrasten des Entfederungshebels 138 in die Entfederungshebel-Aufnahme 139 kann auf den Entfederungshebel 138 ein entsprechender Druck aufgebracht werden, so dass eine Entfederung bewirkt wird. Die Entfederungshebel-Aufnahme 139 weist ebenfalls eine angedeutete Findungskontur auf, so dass der Entfederungshebel 138 leicht in die Entfederungshebel-Aufnahme 139 gleiten kann.

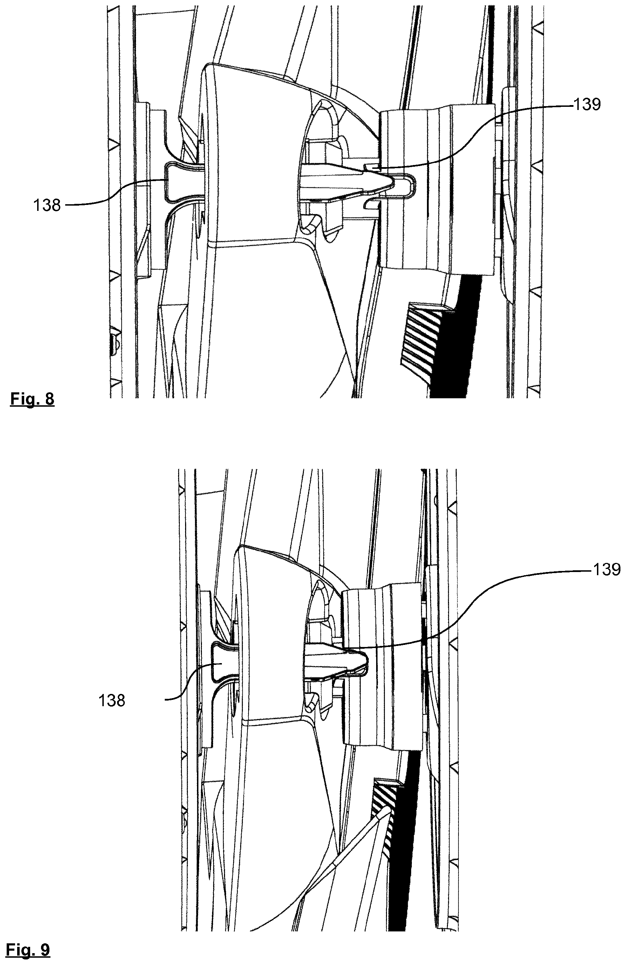

In den Fig. 8 und 9 sind verschiedene Stellungen des Entfederungshebels 138 dargestellt. Im in Fig. 9 dargestellten Zustand ist der Entfederungshebel 138 vollständig in der Entfederungshebel-Aufnahme 139 eingerastet. In Fig. 8 ist dargestellt, dass der Entfederungshebel 138 entlang der Findungskontur der Entfederungsaufnahme 139 hinaus gleiten kann.

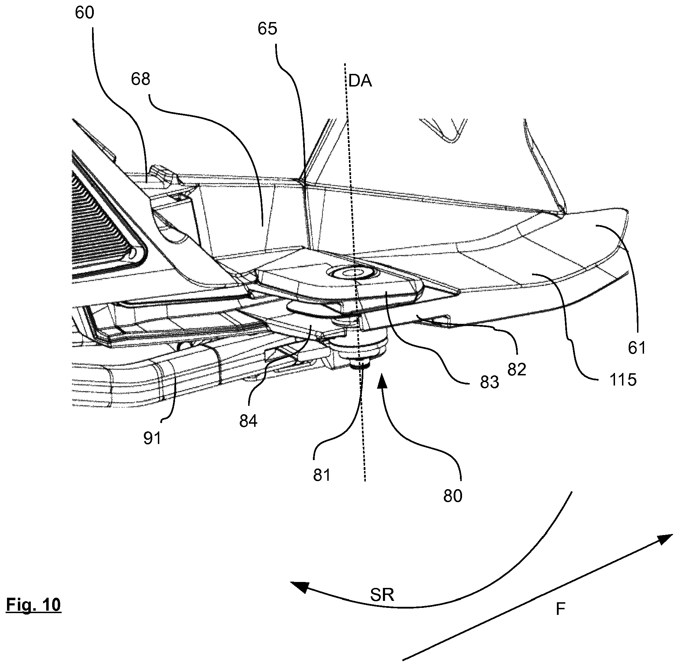

In Fig. 10 ist das Drehgelenk 80 näher dargestellt. Das Drehgelenk 80 ist in Fahrtrichtung F auf der rechten Seite der Fußablage 115 bzw. rechts der Mittelstrebe 68 ausgebildet. Das Drehgelenk 80 ist im Sinne eines Scharniergelenks ausgebildet, wobei ein Gelenkstift 81 einen Plattenabschnitt 82 des vorderen Rahmenteils 61 und Plattenabschnitte 83 und 84 des hinteren Rahmenteils 60 miteinander drehbar verbindet. Sofern die Ständervorrichtung 89 ausgeklappt ist, wird ersichtlich, dass der längere Seitenständer 91 die Schwenkrichtung SR des vorderen Rahmenteils 61 in Richtung des hinteren Rahmenteils 60 bestimmt. Die Drehachse DA des Drehgelenks 80 verläuft im Wesentlichen oder in etwa senkrecht zur Abstellfläche des Fahrzeugs 10 .

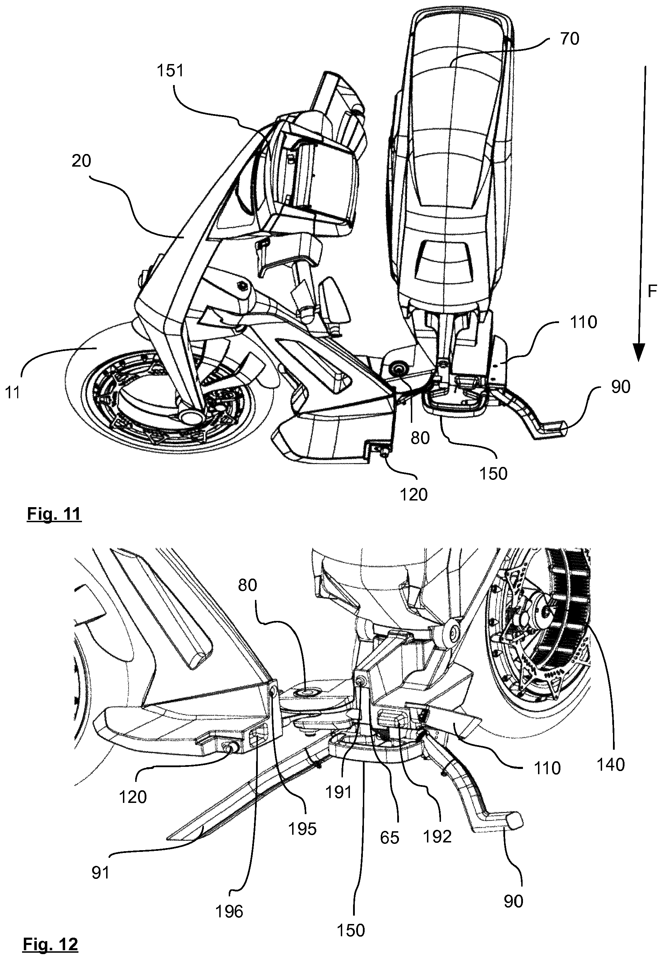

In den Fig. 11 und 12 ist das Fahrzeug, insbesondere der Motorroller 10, im teilweise zusammengeklappten Zustand dargestellt. Der Mechanismus 100 ist entriegelt, so dass das vordere Rahmenteil 61 in Richtung des hinteren Rahmenteils 60 in Schwenkrichtung SR um die Drehachse DA des Drehgelenks 80 nach hinten geschwenkt werden kann. Zu erkennen ist in den Figuren ebenfalls, dass im Trennbereich 65 mehrere Zapfenverbindungen ausgebildet sind. Das hintere Rahmenteil 60 weist hierzu einen ersten kegelförmigen Zapfen 191 sowie einen zweiten in etwa quaderförmigen Zapfen 192 auf. Im vorderen Rahmenteil 61 sind komplementär dazu Zapfenlöcher 195 und 196 ausgebildet. Die Zapfenverbindungen haben im auseinandergeklappten und verriegelten Zustand des Motorrollers 10 eine versteifende Wirkung. Wären die Zapfenverbindungen nicht ausgebildet, wäre lediglich eine Befestigung über die Trennebene 65 hinweg durch das Pedal 110 gegeben.

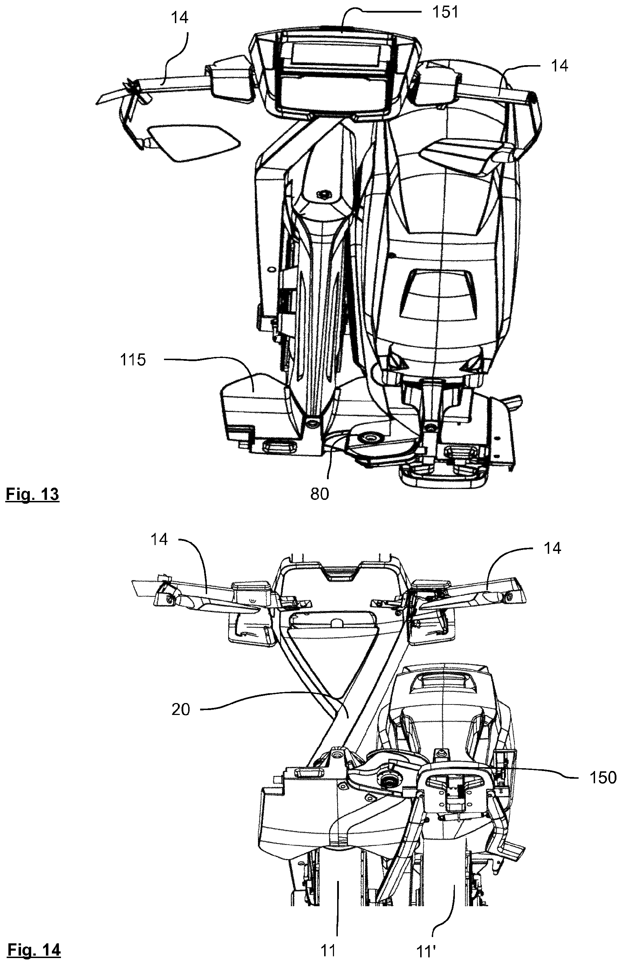

Des Weiteren ist ein Griff 150 zu erkennen, der im Bereich der Ständervorrichtung 89 ausgebildet ist. Der Griff 150 kann im vollkommen zusammengeklappten Zustand des Fahrzeugs, wie dieser in den Fig. 13 und 14 dargestellt ist, eine Ablagemöglichkeit bilden.

In den Fig. 13 und 14 ist die Ständervorrichtung 89 eingeklappt. Die Ständervorrichtung 89 kann aufgrund der Feder 92 (siehe hierzu Fig. 4) eingeklappt werden. Ein Anheben des zusammengeklappten Fahrzeuges 10 ergibt ein selbstständiges Einklappen der Ständervorrichtung 89. Um trotzdem eine Ablagefläche zu bilden, ist der Griff 150 im Bereich der Ständervorrichtung 89 ausgebildet. Im in den Fig. 13 und 14 dargestellten Zustand sind die Handgriffe 14 noch nicht eingeklappt. Diese können ebenfalls eingeklappt werden.

Auch Teile der Lenkeinheit 19 können als Griff ausgebildet sein. Hierzu ist der Abschnitt 151 ausgebildet. Mit Hilfe des Abschnittes 151 ist ein Griff gebildet, so dass das zusammengeklappte Fahrzeug mit den nebeneinander angeordneten Rädern 11 und 11' gezogen werden kann. Durch Verbindung der Achsen 62 und 63 des Vorderrades 11 und des Hinterrades 11' sind die beiden Räder 11 und 11' parallel und deckungsgleich zueinander ausgebildet. Der zusammengeklappte Roller 10 kann in einfacher Art und Weise geschoben bzw. gezogen werden.

Sofern der Motorroller ausgeklappt werden soll, ist zunächst die Radverriegelung 130 zu lösen. Dies erfolgt vorzugsweise durch Betätigung des Fußhebels 140 (siehe Fig. 12). Der Fußhebel 140 bewirkt eine Verdrehung eines Teils der Radverriegelung 130. Die bajonettverschlussartige Radverriegelung 130 kann dann getrennt werden, so dass das Vorderrad 11 von dem Hinterrad 11' um die Drehachse DA weggeschwenkt werden kann.

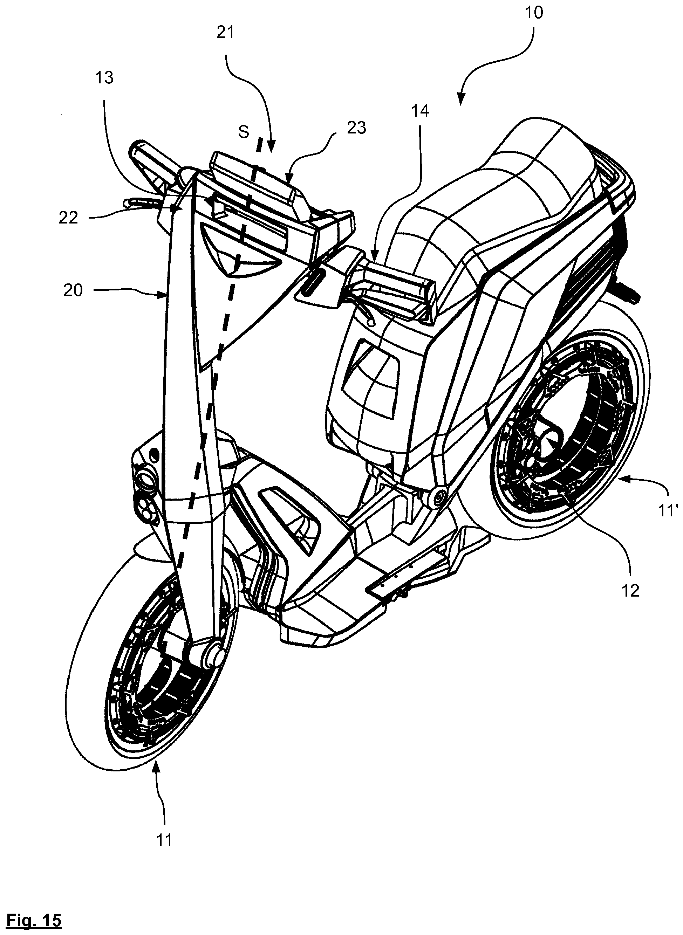

In Fig. 15 wird ein vollständig fahrbereiter Motorroller 10 dargestellt. Die Anzeigeeinheit 23 ist in diesem Fall hochgeklappt. Durch das Hochklappen der Anzeigeeinheit 23 kann eine Verbindung zur Antriebseinheit 12 hergestellt werden. Es ist möglich, dass durch ein Zuklappen der Anzeigeeinheit 23 die Energieversorgung der Antriebseinheit 12 unterbrochen wird. Dabei führt das Zuklappen der Anzeigeeinheit 23 zum Betätigen eines Schalters, der zwischen der Anzeigeeinheit 23 und einem darunterliegenden Bedienfeld angeordnet ist. Der Schalter sendet beim Betätigen ein Signal an eine Steuervorrichtung, die in Reaktion darauf den Stromfluss von der Batterie 180 zu der Antriebseinheit 12 hin unterbricht. Durch das Hochklappen der Anzeigeeinheit 23 wird ein anderes Signal an die Steuervorrichtung gesendet. Dieses Signal bewirkt im hochgeklappten Zustand der Anzeigeeinheit 23, dass ein Stromfluss von der Batterie 180 zu der Antriebseinheit 12 hergestellt wird.

Im Zusammenhang mit den Figuren 15, 16 und 17 wird der Lenker 21 näher dargestellt. Der Lenker 21 ist fest an der Lenksäule 20 montiert, die um eine Schwenkachse S verschwenkt werden kann, und der Lenker 21 umfasst eine Basis 22 sowie Handgriffe 14. Die Handgriffe 14 sind an Griffträgern 30, 30' an der Basis 22 angeordnet. Über die Handgriffe 14 kann der Fahrer des Motorrollers 10 verschiedene Funktionen des Motorrollers 10 steuern, wie z.B. Hupen, Blinken, Bremsen oder Beschleunigen. Die Griffträger 30, 30' sind jeweils wechselseitig gelenkig mit der Basis 22 verbunden. Im vorderen Bereich des Motorrollers 10 ist am Lenker 21 eine Betätigungsöffnung 13 vorgesehen, so dass der Griff 151 gebildet werden können. In die Betätigungsöffnung 13 kann der Fahrer hineingreifen, so dass die Betätigungsöffnung 13 bzw. der Griff 151 dazu verwendet werden kann, den Motorroller 10 im zusammengeklappten Zustand zu ziehen. Der Fahrer kann durch das Hindurchgreifen durch die Betätigungsöffnung 13 einen Betätigungshebel 56 erreichen und eine Verriegelung der Handgriffe 14 lösen und so den Lenker 21 zusammenklappen.

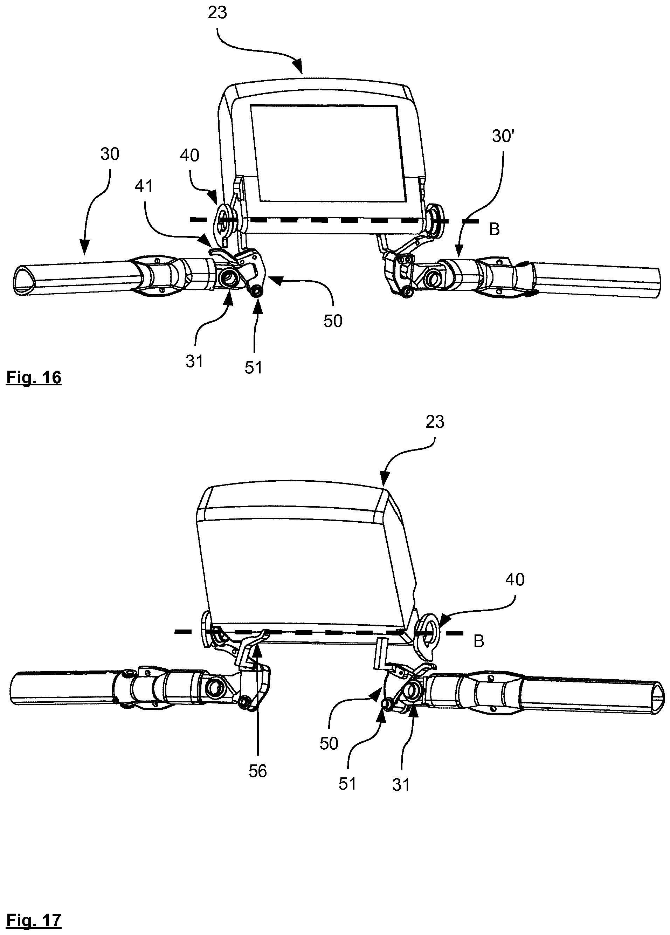

Die Figuren 16 und 17 sind Detailansichten von wichtigen mechanischen Teilen des Lenkers 21, wobei Verkleidungsteile sowie die Basis 22 zur Verdeutlichung der Funktionsweise der Verriegelung nicht dargestellt sind.

Die Anzeigeeinheit 23 ist in aufgeklappter Position dargestellt, wobei seitlich an der Anzeigeeinheit 23 eine Sperrvorrichtung 40 angeordnet ist. Die Anzeigeeinheit 23 und die Sperrvorrichtung 40 sind beide an einer Welle um die Anzeige-Drehachse B drehbar gelagert. Die Anzeigeeinheit 23 und die Sperrvorrichtung 40 können in diesem Ausführungsbeispiel also nur zusammen verschwenkt werden. Ferner zeigt die Fig. 16 zwei Griffträger 30, 30', die jeweils seitlich unterhalb der Anzeigeeinheit 23 angeordnet sind. Die Griffträger 30, 30' sind drehbar an Trägergelenken 31 verschwenkbar mit der Basis 22 verbunden. Die Griffträger 30, 30' werden von einer Haltevorrichtung 50 verriegelt. Die Haltevorrichtung 50 ist verschwenkbar über ein Haltegelenk 51 mit der Basis 22 verbunden. Die Griffträger 30, 30' können aus einer Vielzahl an Materialien und einer Vielzahl von Konfigurationen hergestellt sein. In dem dargestellten Ausführungsbeispiel sind die Griffträger 30, 30' als hohle Rohre aus Faserverbundstoff ausgebildet. In weiteren Ausführungsbeispielen sind die Griffträger 30, 30' z.B. als hohle Alu- oder Magnesiumrohre ausgebildet. Vorzugsweise werden Leichtbaumaterialien verwendet, um das Gewicht zu reduzieren und so positiv auf den Energieverbrauch des Motorrollers 10 einzuwirken.

Fig. 17 zeigt Teile des Lenkers 21 der Fig. 16 in einer schematischen Vorderansicht. Insbesondere zeigt die Fig. 17, dass die Haltevorrichtung 50 über Betätigungshebel 56 verschwenkt werden kann. Dabei stellen die Betätigungshebel 56 jene Elemente dar, die der Fahrer zum Zusammenklappen des Lenkers 21 betätigen muss. Wie jedoch aus den Fig. 16 und 17 deutlich hervorgeht, ist eine Betätigung dieser Hebel durch den Fahrer, während sich die Anzeigeeinheit 23 in einer aufgeklappten Position befindet, nicht möglich. In dem genannten Fall blockiert die Sperrvorrichtung 40 Sperrhebel 41, die mit der Haltevorrichtung 50 verbunden sind.

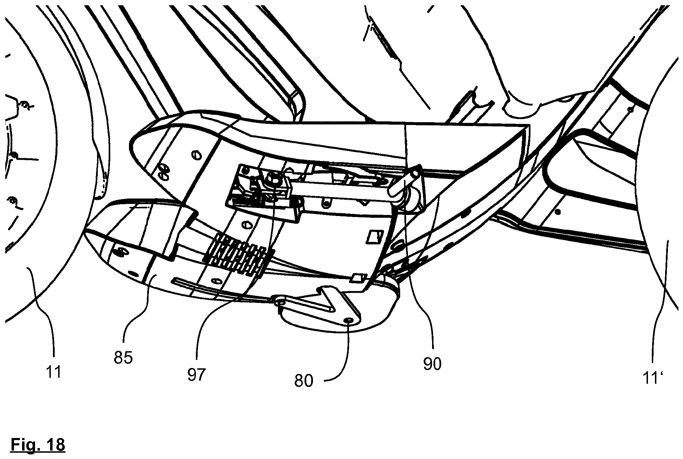

Fig. 18 zeigt einen Ausschnitt eines weiteren Ausführungsbeispiels des Motorrollers 10 in einer Unteransicht. Fig. 18 zeigt, dass die Ständervorrichtung einen Seitenständer 90 aufweist, der an dem vorderen Rahmenteil 61 über ein Ständergelenk 97 verschwenkbar befestigt ist. Zum Abstellen des Motorrollers 10 kann der Seitenständer 90 ausgeklappt werden, sodass das Vorderrad 11, das Hinterrad 11' und der Seitenständer 90 Auflagepunkte bilden, die den Motorroller 10 stabil halten.

Zum Zusammenklappen des Motorrollers 10 der Fig. 18 wird wie beschrieben durch Betätigung des Fußhebels 110 die Verriegelung zwischen hinteren Rahmenteil 60 und dem vorderen Rahmenteil 61 gelöst. Anschließend wird der Lenker 21 bzw. die Lenksäule 20 derart verschwenkt, dass das Vorderrad 11 einen Winkel von mehr als 90 Grad bezüglich der Fahrzeuglängsachse einnimmt. Das Vorderrad 11 kann nun um das Drehgelenk 80 herum verschwenkt werden.

Bis zum einem Winkel von 90 Grad, vorzugsweise 100 Grad, zwischen vorderem Rahmenteil 61 und hinterem Rahmenteil 60 (erste Drehphase), wird der Motorroller 10, wie beschrieben, durch das Vorderrad 11, das Hinterrad 11' und den Seitenständer 90 stabil gehalten.

Ab einem Winkel von größer 90 Grad, vorzugsweise 110 Grad, zwischen vorderem Rahmenteil 61 und hinterem Rahmenteil 60, verliert das Vorderrad 11 Kontakt zum Boden und der Motoroller 10 wird durch das Hinterrad 11', den Seitenständer 90 und einen Auflagepunkt 85 am Fußpedal 110 stabil gehalten. Dadurch, dass das Vorderrad 11 nun frei bewegbar in der Luft hängt, ist der Lenker 21 bzw. Lenksäule 20 frei beweglich. Das Vorderrad 11 kann nun an der Längsachse des vorderen Rahmenteils 61 ausgerichtet werden. Das Vorderrad 11 und das Hinterrad 11' sind dann zumindest im Wesentlichen parallel zueinander angeordnet, sodass sie wie beschrieben miteinander verriegelt werden können.

Zum Ausklappen des Motorrollers 10 wird das mit Bezug auf Fig. 18 beschriebene Verfahren rückwärts ausgeführt, wobei der Lenker 21 bzw. die Lenksäule in den entgegengesetzte Richtung verschwenkt werden.

Alternativ sind Ausführungsformen denkbar, in denen die Sperrvorrichtung 40 als eine Sperrscheibe ausgebildet ist. Eine Sperrscheibe ist nicht rotationssymmetrisch ausgebildet, sondern weist einen Bereich auf, der eine Auskragung hat. Der Bereich der Auskragung ist dabei verstärkt ausgebildet, um eine erhöhte Belastung an der Auskragung Rechnung zu tragen. Eine Sperrscheibe kann ein Verschwenken des Sperrhebels 41 und damit auch ein Verschwenken der Haltevorrichtung 50 blockieren.

### Bezuaszeichenliste

- 10: Motorroller
- 11: Vorderrad
- 11': Hinterrad
- 12: Antriebseinheit / Elektromotor
- 13: Betätigungsöffnung
- 14: Handgriff
- 19: Lenkeinheit
- 20: Lenksäule
- 21: Lenker
- 22: Basis
- 23: Anzeigeeinheit
- 26: Schwinge
- 30, 30': Griffträger
- 31: Trägergelenk
- 40: Sperrvorrichtung
- 41: Sperrhebel
- 50: Haltevorrichtung
- 51: Haltegelenk
- 56: Betätigungshebel
- 60: Hinteres Rahmenteil
- 61: Vorderes Rahmenteil
- 62: Achse Vorderrad
- 63: Achse Hinterrad
- 65: Trennbereich
- 68: Mittelstrebe
- 70: Sitz-Einheit
- 71: Sattel
- 72: Batteriekasten
- 73: Griff
- 74: Rolle
- 80: Drehgelenk
- 81: Stift
- 82, 83, 84: Plattenabschnitt
- 85: Auflagepunkt
- 89: Ständervorrichtung
- 90: Linker Seitenständer
- 91: Rechter Seitenständer
- 92: Feder
- 93: Hebelabschnitt
- 95: Anschlagelement
- 96: Gestänge
- 97: Ständergelenk
- 100: Verriegelnder Mechanismus
- 105: Verriegelungshaken
- 106: Nase
- 110: Pedal
- 111: Hinterer Abschnitt
- 115: Fußablage
- 120: Verriegelungs-Bolzen
- 121: Kontur
- 130: Radverriegelung
- 131: Radverriegelungs-Bolzen
- 132: Bolzen-Aufnahme
- 133: Verriegelungskontur
- 135: Findungskontur
- 136: Zentrum
- 137: Stift
- 138: Entfederungshebel
- 139: Entfederungshebel-Aufnahme
- 140: Fußhebel
- 150: Griff
- 151: Griff
- 180: Batterie
- 191, 192: Zapfen
- 195, 196: Zapfenloch

- B: Anzeige-Drehachse
- DA: Drehachse
- L: Längsachse Fahrzeug
- S: Schwenkachse
- SR: Schwenkrichtung

## Patentansprüche

1. Zusammenklappbarer Motorroller mit einem eine Sitz-Einheit (70) und ein Hinterrad (11') tragenden hinteren Rahmenteil (60) und einem eine Lenkeinheit (19) und ein Vorderrad (11) tragenden vorderen Rahmenteil (61), wobei
das vordere Rahmenteil (61) und das hintere Rahmenteil (60) über ein azentrisches Drehgelenk (80) miteinander verbunden sind derart, dass bei einem Zusammenklappen des Motorrollers (10) mindestens eines des vorderen und des hinteren Rahmenteils (60, 61) derart verschwenkbar ist, dass das Vorderrad (11) und das Hinterrad (11') nebeneinander, insbesondere deckungsgleich nebeneinander, angeordnet sind, **gekennzeichnet durch** einen das vordere Rahmenteil (61) und das hintere Rahmenteil (60) im auseinandergeklappten Zustand verriegelnden Mechanismus (100), der
einen Verriegelungshaken (105) umfasst, der durch ein Pedal (110) betätigbar ist, wobei das Pedal (110) als Teilabschnitt einer Fußablage (115) des Motorrollers (10) ausgebildet ist.

2. Zusammenklappbarer Motorroller (10) nach Anspruch 1,
**gekennzeichnet durch**
eine Ständervorrichtung, die mindestens zwei Seitenständer (90; 91) umfasst.

3. Zusammenklappbarer Motorroller (10) nach Anspruch 2,
**dadurch gekennzeichnet, dass**
die mindestens zwei Seitenständer (90; 91) zueinander asymmetrisch angeordnet sind und unterschiedliche Längen aufweisen und vorzugsweise mechanisch, insbesondere über eine Gestänge (96), miteinander gekoppelt sind und/oder
die Ständervorrichtung, insbesondere der kürzere Seitenständer (90), mit einer Feder (92) verbunden ist, die beim Ausklappen der Ständervorrichtung, insbesondere beim Ausklappen des kürzeren Seitenständers (90), spannbar ist.

4. Zusammenklappbarer Motorroller (10) nach einem der vorhergehenden Ansprüche,
**dadurch gekennzeichnet, dass**
das Pedal (110) mittels eines Seitenständers bzw. eines der Seitenständer (90, 91) entriegelbar ist und/oder
am Pedal (110) der Verriegelungshaken (105) und am vorderen Rahmenteil (61) ein Verriegelungsbolzen (120) ausgebildet ist.

5. Zusammenklappbarer Motorroller (10) nach einem der vorhergehenden Ansprüche,
**dadurch gekennzeichnet, dass**
ein/der längere(r) Seitenständer (91) die Schwenkrichtung (SR) des vorderen Rahmenteils (61) in Richtung des hinteren Rahmenteils (60) bestimmt und/oder
das Vorderrad (11) und das azentrische Drehgelenk (80) derart zueinander angeordnet sind, dass das Vorderrad (11) entlang einer Kreisbahn um das azentrische Drehgelenk (80) herum verschwenkbar ist.

6. Zusammenklappbarer Motorroller (10) nach Anspruch 1,
**dadurch gekennzeichnet, dass**
das Hinterrad (11'), eine Ständervorrichtung und zumindest ein Teilabschnitt der Fußablage (115), insbesondere das Pedal (110), derart angeordnet und dazu ausgebildet sind, zumindest abschnittsweise während eines Zusammenklappens des Motorrollers (10), insbesondere während einer ersten Drehphase, insbesondere die einzigen, Auflagepunkte des Motorrollers (10) zu bilden.

7. Zusammenklappbarer Motorroller (10) nach Anspruch 6,
**dadurch gekennzeichnet, dass**
das Hinterrad (11'), die Ständervorrichtung und zumindest ein Teilabschnitt der Fußablage (115), insbesondere das Pedal (110), derart angeordnet und dazu ausgebildet sind, in einer zweiten, insbesondere beim Zusammenklappen der ersten Drehphase zeitlich folgenden, Drehphase, insbesondere die einzigen, Auflagepunkte des Motorrollers (10) zu bilden.

8. Zusammenklappbarer Motorroller (10) nach einem der Ansprüche 6 oder 7,
**dadurch gekennzeichnet, dass**
die Ständervorrichtung mit dem vorderen Rahmenteil (61), insbesondere über ein Ständergelenk (97), verbunden ist.

9. Zusammenklappbarer Motorroller (10) nach einem der vorhergehenden Ansprüche,
**dadurch gekennzeichnet, dass**
die Achse des Vorderrads (11) im zusammengeklappten Zustand des Motorrollers (10) mit der Achse des Hinterrads (11') mittels einer Radverriegelung (130) verbunden oder verbindbar ist.

10. Zusammenklappbarer Motorroller nach Anspruch 9,
**dadurch gekennzeichnet, dass**
die Radverriegelung (130) bajonettverschlussartig ausgebildet ist und an einem der beiden Räder (11, 11'), insbesondere an dem Hinterrad (11'), ein Radverriegelungs-Bolzen (131) und an dem verbleibenden Rad (11, 11'), insbesondere an dem Vorderrad (11), eine Bolzen-Aufnahme (132) ausgebildet ist.

11. Zusammenklappbarer Motorroller (10) nach Anspruch 10,
**dadurch gekennzeichnet, dass**
die Bolzen-Aufnahme (132) eine Findungskontur (135) aufweist und/oder die Radverriegelung (130) einen Entfederungsmechanismus, insbesondere einen Entfederungshebel (138), umfasst, der im zusammengeklappten Zustand des Motorrollers (10) eine Entfederung mindestens eines der beiden Räder (11, 11'), insbesondere mindestens des Hinterrads (11'), bewirkt.

12. Zusammenklappbarer Motorroller (10) nach einem der Ansprüche 9 bis 11,
**dadurch gekennzeichnet, dass**
die Radverriegelung (130) durch einen an einem der beiden Räder (11, 11'), insbesondere an dem Hinterrad (11'), ausgebildeten Hebel, insbesondere einen Fußhebel (140), entriegelbar ist.

13. Zusammenklappbarer Motorroller (10) nach Anspruch 12,
**dadurch gekennzeichnet, dass**
mittels des Hebels, insbesondere des Fußhebels (140), der Radverriegelungs-Bolzen (131) und/oder ein Verriegelungs-Stift und/oder eine Verriegelungs-Kontur (133) drehbar ist und/oder die Lenkeinheit (19) einen Lenker (21) mit einer Basis (22) umfasst, wobei der Lenker (21):
- zumindest einen Griffträger (30, 30'), der gelenkig an der Basis (22) angeordnet ist und der von einer ersten Trägerposition in eine zweite Trägerposition verschwenkbar ist,
- eine Haltevorrichtung (50), die so angeordnet und/oder ausgebildet ist, dass die Haltevorrichtung (50) gelenkig von einer ersten Halteposition in eine zweite Halteposition verschwenkbar ist, wobei die Haltevorrichtung (50) in der ersten Halteposition den Griffträger (30, 30') mit der Basis (22) verriegelt,
- eine Sperrvorrichtung (40), die gelenkig an der Basis (22) angeordnet ist und die von einer ersten Sperrposition in eine zweite Sperrposition verschwenkbar ist, wobei die Sperrvorrichtung (40) derart angeordnet und/oder ausgebildet ist, dass die Sperrvorrichtung (40) in der ersten Sperrposition die Haltevorrichtung (50) blockiert,
umfasst.

14. Zusammenklappbarer Motorroller (10) nach einem der vorhergehenden Ansprüche,
**dadurch gekennzeichnet, dass**
der Motorroller mit einem Elektro-Antrieb (12) antreibbar ist.

15. Zusammenklappbarer Motorroller (10) nach Anspruch 14,
**dadurch gekennzeichnet, dass**
eine Stromquelle, insbesondere eine Batterie (180), des Elektro-Antriebs (12), am hinteren Rahmenteil (60) lösbar verankert ist.

## Claims

1. A foldable motor scooter having a seat unit (70) and a rear frame part (60) supporting a rear wheel (11') and a front frame part (61) supporting a steering unit (19) and a front wheel (11), wherein
the front frame part (61) and the rear frame part (60) are connected to one another via an acentric pivot joint (80) in such a way that when the motor scooter (10) is folded, at least one of the front and the rear frame part (60, 61) is pivotable in such a way that the front wheel (11) and the rear wheel (11') are arranged adjacent to one another, in particular congruently adjacent to one another,
**characterized by** a mechanism (100) locking the front frame part (61) and the rear frame part (60) in the unfolded state, which comprises a locking hook (105), which is actuatable by a pedal (110), wherein the pedal (110) is formed as a portion of a foot rest (115) of the motor scooter (10).

2. The foldable motor scooter (10) according to Claim 1,
**characterized by** a stand device, which comprises at least two side stands (90; 91).

3. The foldable motor scooter (10) according to Claim 2,
**characterized in that** the at least two side stands (90; 91) are arranged asymmetrically in relation to one another and have different lengths and are coupled to one another, preferably mechanically, in particular via a linkage (96), and/or
the stand device, in particular the shorter side stand (90), is connected to a spring (92), which can be tensioned upon unfolding of the stand device, in particular upon unfolding of the shorter side stand (90).

4. The foldable motor scooter (10) as claimed in any one of the preceding claims,
**characterized in that** the pedal (110) is unlockable by means of a side stand or one of the side stands (90, 91) and/or
a locking stud (120) is formed on the pedal (110) of the locking hook (105) and on the front frame part (61).

5. The foldable motor scooter (10) as claimed in any one of the preceding claims,
**characterized in that** one/the longer side stand (91) determines the pivot direction (SR) of the front frame part (61) in the direction of the rear frame part (60) and/or
the front wheel (11) and the acentric pivot joint (80) are arranged in relation to one another in such a way that the front wheel (11) is pivotable along a circular path around the acentric pivot joint (80).

6. The foldable motor scooter (10) according to Claim 1,
**characterized in that** the rear wheel (11'), a stand device, and at least a portion of the foot rest (115), in particular the pedal (110) are arranged in such a way and designed for the purpose of forming support points, in particular the only one, of the motor scooter (10) at least in sections during folding of the motor scooter (10), in particular during a first rotation phase.

7. The foldable motor scooter (10) according to Claim 6,
**characterized in that** the rear wheel (11'), the stand device, and at least a portion of the foot rest (115), in particular the pedal (110), are arranged in such a way and designed for the purpose of forming support points, in particular the only one, of the motor scooter (10) in a second rotation phase, in particular chronologically following the first rotational phase during the folding.

8. The foldable motor scooter (10) according to any one of Claims 6 or 7,
**characterized in that** the stand device is connected to the front frame part (61), in particular via a stand joint (97).

9. The foldable motor scooter (10) according to any one of the preceding claims,
**characterized in that** the axle of the front wheel (11) is connected or connectable in the folded state of the motor scooter (10) to the axle of the rear wheel (11') by means of a wheel lock (130).

10. The foldable motor scooter according to Claim 9,
**characterized in that** the wheel lock (130) is designed like a bayonet fitting and a wheel lock stud (131) is formed on one of the two wheels (11, 11'), in particular on the rear wheel (11'), and a stud receptacle (132) is formed on the remaining wheel (11, 11'), in particular on the front wheel (11).

11. The foldable motor scooter (10) according to Claim 10,
**characterized in that** the stud receptacle (132) has a finding contour (135) and/or the wheel lock (130) comprises a spring removal mechanism, in particular a spring removal lever (138), which, in the collapsed state of the motor scooter (10), effectuates a spring removal of at least one of the two wheels (11, 11'), in particular of at least the rear wheel (11').

12. The foldable motor scooter (10) according to any one of Claims 9 to 11,
**characterized in that** the wheel lock (130) is unlockable by a lever, in particular a foot lever (140), formed on one of the two wheels (11, 11'), in particular on the rear wheel (11').

13. The foldable motor scooter (10) according to Claim 12,
**characterized in that** by means of the lever, in particular the foot lever (140), the wheel locking stud (131) and/or a locking pin and/or a locking contour (133) is rotatable and/or the steering unit (19) comprises handlebars (21) having a base (22),
wherein the handlebars (21) comprise:
- at least one grip support (30, 30'), which is arranged in an articulated manner on the base (22) and is pivotable from a first carrier position into a second carrier position,
- a retaining device (50), which is arranged and/or designed so that the retaining device (50) is pivotable in an articulated manner from a first retaining position into a second retaining position, wherein the retaining device (50) locks the grip support (30, 30') to the base (22) in the first retaining position,
- a blocking device (40), which is arranged in an articulated manner on the base (22) and is pivotable from a first blocking position into a second blocking position, wherein the blocking device (40) is arranged and/or designed in such a way that the blocking device (40) blocks the retaining device in the first blocking position (50).

14. The foldable motor scooter (10) as claimed in any one of the preceding claims,
**characterized in that** the motor scooter is drivable using an electric drive (12).

15. The foldable motor scooter (10) according to Claim 14,
**characterized in that** a power source, in particular a battery (180), of the electric drive (12) is removably anchored on the rear frame part (60).

## Revendications

1. Scooter pliable présentant une partie de cadre arrière (60) portant une unité de siège (70) et une roue arrière (11') et une partie de cadre avant (61) portant une unité de direction (19) et une roue avant (11), sachant que
la partie de cadre avant (61) et la partie de cadre arrière (60) sont reliées l'une à l'autre via une articulation rotative acentrée (80) de telle manière qu'en cas de pliage du scooter (10), au moins l'une des parties de cadre avant et arrière (60, 61) soit pivotable de telle manière que la roue avant (11) et la roue arrière (11') soient disposées l'une à côté de l'autre, en particulier de manière coïncidente,
**caractérisé par**
un mécanisme (100) qui verrouille la partie de cadre avant (61) et la partie de cadre arrière (60) à l'état déplié et qui comprend un crochet de verrouillage (105) qui est actionnable par une pédale (110), sachant que la pédale (110) est constituée comme section partielle d'un repose-pied (115) du scooter (10).

2. Scooter pliable (10) selon la revendication 1,
**caractérisé par**
un dispositif de béquilles qui comprend au moins deux béquilles latérales (90 ; 91).

3. Scooter pliable (10) selon la revendication 2,
**caractérisé en ce que**
les au moins deux béquilles latérales (90 ; 91) sont disposées asymétriquement l'une par rapport à l'autre et présentent des longueurs différentes et sont couplées l'une à l'autre de préférence mécaniquement, en particulier via une tringlerie (96), et/ou
le dispositif de béquilles, en particulier la béquille latérale (90) plus courte, est relié à un ressort (92) qui peut être tendu lors du dépliage du dispositif de béquilles, en particulier lors du dépliage de la béquille latérale (90) plus courte.

4. Scooter pliable (10) selon l'une des revendications précédentes,
**caractérisé en ce que**
la pédale (110) est déverrouillable moyennant une béquille latérale ou l'une des béquilles latérales (90, 91) et/ou
le crochet de verrouillage (105) est constitué au niveau de la pédale (110) et un boulon de verrouillage (120) est constitué au niveau de la partie de cadre avant (61).

5. Scooter pliable (10) selon l'une des revendications précédentes,
**caractérisé en ce que**
une/la béquille latérale (91) plus longue détermine la direction de pivotement (SR) de la partie de cadre avant (61) en direction de la partie de cadre arrière (60) et/ou
la roue avant (11) et l'articulation pivotante acentrée (80) sont disposées l'une par rapport à l'autre de telle manière que la roue avant (11) soit pivotable le long d'une orbite circulaire autour de l'articulation rotative acentrée (80).

6. Scooter pliable (10) selon la revendication 1,
**caractérisé en ce que**
la roue arrière (11'), un dispositif de béquilles et au moins une section partielle du repose-pied (115), en particulier la pédale (110), sont disposés et constitués de manière à former au moins par sections des points d'appui, en particulier les seuls, du scooter (10) pendant un pliage du scooter (10), en particulier pendant une première phase de rotation.

7. Scooter pliable (10) selon la revendication 6,
**caractérisé en ce que**
la roue arrière (11'), le dispositif de béquilles et au moins une section partielle du repose-pied (115), en particulier la pédale (110), sont disposés et constitués de manière à former au moins par sections des points d'appui, en particulier les seuls, du scooter (10) dans une deuxième phase de rotation, en particulier consécutive chronologiquement à la première phase de rotation lors du pliage.

8. Scooter pliable (10) selon l'une des revendications 6 ou 7,
**caractérisé en ce que**
le dispositif de béquilles est relié à la partie de cadre avant (61), en particulier via une articulation de béquilles (97).

9. Scooter pliable (10) selon l'une des revendications précédentes,
**caractérisé en ce que**
l'essieu de la roue avant (11) est relié ou reliable, à l'état plié du scooter (10), à l'essieu de la roue arrière (11') moyennant un verrouillage de roues (130).

10. Scooter pliable (10) selon la revendication 9,
**caractérisé en ce que**
le verrouillage de roues (130) est constitué sous forme de fermeture à baïonnette et un boulon de verrouillage de roues (131) est constitué au niveau de l'une des deux roues (11, 11'), en particulier au niveau de la roue arrière (11'), et un logement de boulon (132) est constitué au niveau de la roue restante (11, 11'), en particulier au niveau de la roue avant (11).

11. Scooter pliable (10) selon la revendication 10,
**caractérisé en ce que**
le logement de boulon (132) présente un contour de guidage (135) et/ou le verrouillage de roues (130) comprend un mécanisme de mise hors prise de ressort, en particulier un levier de mise hors prise de ressort (138), qui, à l'état plié du scooter (10), provoque une mise hors prise de ressort d'au moins l'une des deux roues (11, 11'), en particulier d'au moins la roue arrière (11').

12. Scooter pliable (10) selon l'une des revendications 9 à 11,
**caractérisé en ce que**
le verrouillage de roues (130) est déverrouillable par un levier, en particulier un levier à pied (140), constitué au niveau de l'une des deux roues (11, 11'), en particulier au niveau de la roue arrière (11').

13. Scooter pliable (10) selon la revendication 12,
**caractérisé en ce que**
moyennant le levier, en particulier le levier à pied (140), le boulon de verrouillage de roues (131) et/ou une broche de verrouillage et/ou un contour de verrouillage (133) est rotatif et/ou
l'unité de direction (19) comprend un guidon (21) avec une base (2 2), sachant que le guidon (21) comprend :
- au moins un porte-poignées (30, 30') qui est disposé de manière articulée au niveau de la base (22) et est pivotable d'une première position de support à une deuxième position de support,
- un dispositif de retenue (50) qui est disposé et/ou constitué de telle sorte que le dispositif de retenue (50) soit pivotable de manière articulée d'une première position de retenue à une deuxième position de retenue, sachant que le dispositif de retenue (50) verrouille le porte-poignées (30, 30') avec la base (22) dans la première position de retenue,
- un dispositif d'arrêt (40) qui est disposé de manière articulée au niveau de la base (22) et qui est pivotable d'une première position d'arrêt à une deuxième position d'arrêt, sachant que le dispositif d'arrêt (40) est disposé et/ou constitué de telle manière que le dispositif d'arrêt (40) bloque le dispositif de retenue (50) dans la première position d'arrêt.

14. Scooter pliable (10) selon l'une des revendications précédentes,
**caractérisé en ce que**
le scooter est entraînable (12) avec un entraînement électrique (12).

15. Scooter pliable (10) selon la revendication 14,
**caractérisé en ce que**
une source de courant, en particulier une batterie (180), de l'entraînement électrique (12) est fixée de manière amovible au niveau de la partie de cadre arrière (60).
